(19) Europäisches Patentamt

European Patent Office

Office européen des brevets

(11) Veröffentlichungsnummer: **0 273 244**
**A2**

(12) # EUROPÄISCHE PATENTANMELDUNG

(21) Anmeldenummer: **87118116.0**

(22) Anmeldetag: **08.12.87**

(51) Int. Cl.⁴ **C01G 23/053 , C22B 3/00**

(30) Priorität: **20.12.86 DE 3643711**

(43) Veröffentlichungstag der Anmeldung:
**06.07.88 Patentblatt 88/27**

(84) Benannte Vertragsstaaten:
**BE DE FR GB IT NL**

(71) Anmelder: **BAYER ANTWERPEN N.V.**
**Kanaaldok B 1 Kruisschans**
**B-2040 Antwerpen 4(BE)**

(72) Erfinder: **Denecker, Gabriel, Dr.**
**Vinkenlaan 18**
**B-2180 Kalmthout(BE)**
Erfinder: **Sluyts, Domien**
**Elzenlaan 4**
**B-2091 Hoevenen(BE)**
Erfinder: **Leuridan, Joel, Dr.**
**Draakstraat 18**
**B-2018 Antwerpen(BE)**
Erfinder: **Verhoeven, Werner, Dr.**
**Epiceadreef 3**
**B-2180 Kalmthout(BE)**
Erfinder: **Van Royen, Luc, Dr.**
**Berkenlaan 138**
**B-2091 Hoevenen(BE)**

(74) Vertreter: **Steiling, Lothar et al**
**Bayer AG Zentralbereich Patente, Marken**
**und Lizenzen**
**D-5090 Leverkusen, Bayerwerk(DE)**

(54) **Verfahren zur Herstellung von hochwertigem Titandioxid nach dem Sulfatverfahren.**

(57) Die vorliegende Erfindung betrifft ein Verfahren zur Herstellung von hochwertigem Titandioxid nach dem Schwefelsäure-Aufschlußverfahren durch Umsetzung von Ilmenit und/oder titanhaltigen Schlacken mit hochprozentiger Schwefelsäure, Auflösen der festen Aufschlußmassen mit metallsulfathaltiger wäßriger Schwefelsäure und gegebenenfalls Wasser und Reduktion des dreiwertigen Eisens und Abtrennung des unlöslichen Rohstoffanteils zur Gewinnung einer fremdmetallsalzreichen schwefelsäurehaltigen Titanylsulfat-Lösung, weiter Schwarzlösung genannt, Hydrolyse der Schwarzlösung mit anschließender Abtrennung des gefällten Titanoxidhydrats, intensiver Wasserwäsche, Trocknung und gegebenenfalls Kalzinierung, wobei die Schwarzlösung vor der Hydrolyse mit einem organischen Medium, weiter "Extraktionsmittel" genannt, in Kontakt gebracht wird und Rückextraktion, weiter "Stripping" genannt, der dabei gebildeten organischen Phase mittels Wasser und/oder einer Schwefelsäure und/oder Titanylsulfat enthaltenden wäßrigen Lösung unter Rückführung der dabei erhaltenen organischen Phase in die Extraktion, wobei für das Auflösen der festen Aufschlußmasse die bei der Extraktion anfallende metallsulfathaltige Schwefelsäure, weiter Extraktionsdünnsäure genannt, eingesetzt wird.

EP 0 273 244 A2

FIG.1

## Verfahren zur Herstellung von hochwertigem Titandioxid nach dem Sulfatverfahren

Die vorliegende Erfindung betrifft ein Verfahren zur Herstellung von hochwertigem Titandioxid nach dem Schwefelsure-Aufschlußverfahren durch Umsetzung von Ilmenit und/oder titanhaltigen Schlacken mit hochprozentiger Schwefelsäure, Auflösen der festen Aufsclußmassen mit metallsufathaltiger wäßriger Schwefelsäure und gegebenenfalls Wasser und Reduktion des dreiwertigen Eisens und Abtrennung des unlöslichen Rohstoffanteils zur Gewinnung einer fremdmetallsalzreichen schwefelsäurehaltigen Titanylsulfat-Lösung, weiter Schwarzlösung genannt, Hydrolyse der Schwarzlösung mit anschließender Abtrennung des gefällten Titanoxidhydrats, intensiver Wasserwäsche, Trocknung und gegebenenfalls Kalzinierung.

Bei der üblichen Herstellung von $TiO_2$ nach dem Sulfatverfahren durch Umsetzung von Ilmenit und/oder titanhaltigen Schlacken mit hochprozentiger Schwefelsäure, Auflösen der festen Aufschlußmasse mit Wasser und/oder verdünnter wäßriger Schwefelsäure und Abtrennung des unlöslichen Rohstoffanteils werden - schwefelsäurehaltige $TiOSO_4$-Lösun gen erhalten, die im allgemeinen in erheblichem Maß durch Fremdmetallionen verunreinigt sind. Dies sind hauptsächlich Eisen, weiter Aluminium und Magnesium und ferner kleinere Konzentrationen an Schwermetallen wie z.B. Mangan, Vanadium, Chrom, Niob.

Darüber hinaus wird während des Lösens oder unmittelbar danach alles $Fe^{III}$ zu $Fe^{II}$ und auch ein geringer Teil des $Ti^{IV}$ zu $Ti^{III}$ durch Zugabe von Eisenschrott reduziert, wobei der Eisengehalt noch weiter zunimmt.

Im Falle von Aufschlüssen auf Ilmenit-Basis ist es notwendig, einen Teil der Eisenionen aus dieser leicht $Ti^{III}$-haltigen Aufschlußlösung, weiter als "Schwarzlösung" bezeichnet, vor der Hydrolyse zu entfernen. Dies geschieht üblicherweise durch Kühlungskristallisation und Abtrennung als Grünsalz ($FeSO_4.7H_2O$). Die übrigen Fremdmetalle bleiben jedoch überwiegend in der Schwarzlösung zurück. Beim Schlackeaufschluß dagegen wird wegen des geringeren Eisengehaltes üblicherweise keine Abtrennung der Eisenverbindungen vorgenommen.

In der DE-A 2 620 065 wird ein Extraktionsverfahren zur Entfernung von $Cr^{III}$ und $Nb^V$ aus der Schwarzlösung vorgeschlagen, wobei jedoch eine gute Extrahierbarkeit der $Cr^{III}$-Ionen nur durch ein Aufwärmen der Schwarzlösung auf Temperaturen zwischen 50° C und 80° C, langen Kontaktzeiten und hohen Konzentrationen an freier Säure erreicht werden kann.

Reinigungsverfahren zur Entfernungsämtlicher Fremdmetalle aus der zu hydrolysierenden Schwarzlösung sind nicht bekannt. Die Verfahren zur Hydrolyse von gelöstem Titanylsulfat unter Fällung von Titanoxidhydrat werden also stets in Anwesenheit von verhältnismäßig großen Konzentrationen an Fremdmetallen, wie z.B. Eisen, Mangan, Vanadium, Chrom, Niob, Aluminium, Magnesium, durchgeführt.

Bei solchen Fällungsreaktionen werden bekanntlich stets kleine Mengen der vorgenannten farbgebenen Metalle in Hydroxid-oder Oxidhydratform mitgefällt und/oder an das gefällte Titanoxidhydrat adsorbiert. Dies hat zur Folge, daß die Niederschläge, nach Filtration zur Entfernung der mit Fremdmetallionen beladenen meistens etwa 20 bis 30 % Schwefelsäure enthaltenden Mutterlauge der Hydrolysereaktion, weiter "Dünnsäure" genannte, einer sehr aufwendigen Waschprozedur unterworfen werden müssen. Dies geschieht im allgemeinen mehrstufig mit zwischengeschalteter Bleiche zum Herauslösen der fremdmetalhaltigen Verunreinigungen unter naszierenden Bedingungen und unter Verwendung von sehr großen Wassermengen.

Der vorliegenden Erfindung liegt also die Aufgabe zugrunde, ein großtechnisch wirtschaftlich durchführbares Verfahren zur Herstellung von Titandioxid nach dem Sulfatverfahren zur Verfügung zu stellen, welches die beschriebenen Nachteile der bekannten Verfahren nicht beinhaltet. Insbesondere soll die mit Fremdmetallionen hochbeladene Schwarzlösung in eine praktische fremdmetallsalzfreie hydrolysierbare $TiOSO_4$-Lösung überführt werden können, so daß die Fällung von Titanoxidhydrat praktisch in Abwesenheit von Fremdmetallionen durchgeführt werden kann.

Aus der EP-A 0 090 692 ist bekannt, $Ti^{IV}$-Ionen aus wäßrigen schwefelsäurehaltigen Lösungen und insbesondere aus der Dünnsäure durch Extraktion zurückzugewinnen, wobei das eingesetzte organische Extraktionsmittel Verbindungen der Gruppe der Phosphonsäure-Di-Ester, der Phosphinsäure-Mono-Ester und der Phosphinoxide enthält. Voraussetzung für eine gute Extrahierbarkeit des Titans ist es, daß die zu extrahierende Lösung vor der Extraktion durch Abdestillieren von Wasser sehr weit aufkonzentriert wird. Dies ist im Falle der Schwarzlösung jedoch wegen der zu erwartenden spontanen Hydrolyse nicht ohne weiteres möglich und führt überdies zu einem hochviskosen, siruparigen Konzentrat. Bei einer Extraktion aus diesem Konzentrat werden zugleich auch große Mengen Schwefelsäure mitextrahiert, was zur Folge hat, daß beim Abstreifen des organischen Extraktes mit Wasser schwefelsäurehaltige Titanylsulfat-Lösungen mit einem extrem hohen Verhältnis Schwefelsäure/Titandioxid -weiter "Säurezahl" genannt - erhalten werden. Wie bekannt, kann aus Lösungen mit derartig hohen Säurezahlen nach üblichen Verfahren

kein hochwertiges $TiO_2$-Weißpigment hergestellt werden (Ullmanns Enzyklopädie der technischen Chemie, Auflage 4, Band 18, S. 576).

Ferner ist aus DE-A 2 620 065 bekannt, daß $Ti^{IV}$-Ionen auch aus der $TiO_2$-Dünnsäure extrahiert werden können mittels organischer Lösungsmittelgemische, welche Phosphorsäure-Mono-Ester und/oder Phosphorsäure-Di-Ester enthalten. Solche Extraktionsverfahren führen jedoch zu Extraktphasen, aus denen das Titan nicht mehr mittels Wasser und/oder Schwefelsäure abgestreift werden kann. Es kommt für die Rückextraktion nur eine Fällung mit ammoniakalischen wäßrigen Lösungen infrage, bei gleichzeitiger Überführung der organischen Phosphorsäure in die zum Teil wasserlösliche $NH_4$-Form. Fällungsreaktionen in Anwesenheit von großen Mengen an organischen Komponenten führen jedoch zu organisch stark verunreinigten, oft schlecht filtrierbaren Niederschlgen, aus denen kein hochwertiges $TiO_2$-Produkt erhalten werden kann.

Es wurde nun ein Verfahren gefunden, welches es gestattet die mit Fremdmetallionen beladene Schwarzlösung durch Extraktion mittels eines organischen Extraktionsmittels und Rückextraktion der dabei gebildeten organischen Extraktphase mittels Wasser und/oder einer verdünnter wäßrigen Schwefelsäure aufzuteilen in einerseits eine praktisch titanfreie, fremdmetallsalzreiche wäßrige Schwefelsäure und andererseits eine konzentrierte praktisch fremdmetallsalzfreie schwefelsäurehaltige Titanylsulfat-Lösung, welche sich für die Hydrolyse eignet.

Es wurde nämlich gefunden, daß in einfacher Weise eine nahezu quantitative Extraktion des Titanylsulfates aus der Schwarzlösung erreicht werden kann und daß die Selektivität der Extraktion von Titanylsulfat gegenüber Schwefelsäure bedeutend gesteigert werden kann, wenn geeignete Organophosphorverbindungen enthaltende Extraktionsmittel vor und/oder während der Extraktion der Schwarzlösung so mit einer mittelhoch und/oder hochkonzentrierten, gegebenenfalls metallsalzhaltigen, Schwefelsäure kontaktiert werden, daß die Extraktion des titanylsulfats nun bei bedeutend niedrigerem Säureniveau durchgeführt werden kann.

Gegenstand der vorliegenden Erfindung ist somit ein Verfahren zur Herstellung von hochwertigem Titandioxid nach dem Schwefelsäure-Aufschlußverfahren durch Umsetzung von Ilmenit und/oder titanhaltigen Schlacken mit hochprozentiger Schwefelsäure, Auflösen der festen Aufschlußmassen mit metallsulfathaltiger wäßriger Schwefelsäure und gegebenenfalls Wasser und Reduktion des dreiwertigen Eisens und Abtrennung des unlöslichen Rohstoffanteils zur Gewinnung einer fremdmetallsalzreichen - schwefelsäurehaltigen Titanylsulfat-Lösung, weiter Schwarzlösung genannt, Hydrolyse der Schwarzlösung mit anschließender Abtrennung des gefällten Titanoxidhydrads, intensiver Wasserwäsche, Trocknung und gegebenenfalls Kalzinierung, wobei die Schwarzlösung vor der Hydrolyse mit einem organischen Medium, weiter "Extraktionsmittel" genannt, in Kontakt gebracht wird und Rückextraktion, weiter "Stripping" genannt, der dabei gebildeten organischen Phase mittels Wasser und/oder einer einer Schwefelsäure und/oder Titanylsulfat enthaltenden wäßrigen Lösung unter Rückführung der dabei erhaltenen organischen Phase in die Extraktion, wobei für das Auflösen der festen Aufschlußmasse die bei der Extraktion anfallende metallsulfathaltige Schwefelsäure, weiter Extraktionsdünnsäure genannt, eingesetzt wird.

Das für die Trennung zwischen Titan und Fremdmetallen verwendete Extraktionsmittel enthält eine oder mehrere Orgaphosphorverbindungen der allgemeinen Formel

$R_m(R'O)_n P = O$

in denen

R geradkettige oder verzweigte Alkylgruppen,

R' Alkylgruppen R oder auch gegebenenfalls substituierte Arylgruppen bedeuten,

R und/oder R' gegebenenfalls Heteroatome wie z.B. Sauerstoff, Halogen, Phosphor, Stickstoff, enthalten,

m Werte von 1, 2 oder 3 oder

n Werte von 0, 1 oder 2 annehmen kann,

mit $m + n = 3$ und insgesamt mindestens 12 C-Atome aufweisend zusammen mit 3 bis 15 Gew.-% Wasser.

Repräsentative Beispiele für solche Organophosphorverbindungen sind z.B. Tributylphosphinoxid, Trioctylphosphinoxid, Butyldibutylphosphinat, Dibutylbutylphosphonat, Dibutylisobutylphosphonat, Di-iso-butylbutylphosphonat, Diisobutylisobutylphosphonat und Di-(2-Ethylhexyl)-2-Ethylhexylphosphonat.

Das organische Extraktionsmittel kann auch ein Verdünnungsmittel enthalten. Hierfür kommen aromatische, aliphatische und naphthenische, gegebenenfalls Heteroatome wie z.B. Sauerstoff, Halogen, Phosphor enthaltenden, Kohlenwasserstoffen in Anmerkung. Voraussetzung für die Eignung dieser Verdünnung ist, daß sie chemische inert und praktische wasserunlöslich sind und bei Beladung des Extraktionsmittels mit Titanylsulfat und/oder Schwefelsäure nicht zu einer Entmischung des organischen Extrakts und/oder zu Emulsionsbildung führen.

Schließlich kann das für die Extraktion von Titanylsulfat aus der Schwarzlösung einzusetzende Extraktionsmittel auch Schwefelsäure und/oder Titanylsulfat enthalten, z.B. als Restwert nach Rückextraktion, gegebenenfalls mit anschließender Nachbehandlung, der organischen Titanylsulfat und Schwefelsäure enthaltenden Extraktphase oder nach Vorbehandlung des Extraktionsmittels mit einer Schwefelsäure und gegebenenfalls Metallsalzen enthaltenden wäßrigen Lösung.

Die erfindungsgemäß einzusetzen Organophosphorverbindungen werden bevorzugt in gelöster Form verwendet. So sind die Trialkylphosphinoxide der vorgenannten Formel im allgemeinen relativ niedrig - schmelzende Feststoffe und werden daher meistens aufgelöst in einer flüssigen Organophosphorverbindung der vorgenannten allgemeinen Formel und/oder in einem organischen Verdünnungsmittel. Die Alkylphosphinate und die Dialkylphosphonate sind dagegen meistens mehr oder weniger viskose Flüssigkeiten und können demnach nicht nur in Kombination mit einer andere der genannten Organophosphorverbindungen und/oder mit einem organischen Verdünnungsmittel, sondern, je nach viskosität, gegebenenfalls auch unverdünnt eingesetzt werden.

Die Konzentration an Organophosphorverbindungen der vorgenannten allgemeinen Formel in dem Extraktionsmittel kann in breiten Grenzen schwanken, insbesondere zwischen 5 bis 95 Gew.-%. In der Praxis werden jedoch Konzentrationen von etwa 35 bis 90 Gew.-% bevorzugt. Bei steigendem Gehalt an Verdünnungsmittel nimmt die maximale Beladung der organischen Extraktphase mit TiOSO$_4$ und/oder Schwefelsäure selbstverständlich ab. Unter Umständen kann sogar eine Entmischung des organischen Extrakts in eine obere, verdünnungsmittelreiche und eine untere, verdünnungsmittelärmere Phase auftreten. Als besonders geeignet haben sich Extraktionsmittel erwiesen mit einem Gehalt von mindestens 35 Gew.-% eines oder mehrerer Dialkylphosphonate.

Das für eine quantitative Extraktion von TiOSO$_4$ notwendige Verhältnis Extraktionsmittel/Schwarzlösung ist selbstverständlich sowohl von der Konzentration an Organophosphorverbindungen der vorgenannten allgemeinen Formel in dem Extraktionsmittel als auch von dem TiOSO$_4$-Gehalt der zu extrahierenden Lösung abhängig. Vorzugsweise wird so verfahren, daß das eingesetzte Extraktionsmittel pro mol TiOSO$_4$ in der zu extrahierenden Lösung 1 bis 5 mol der erfindungsgemäßen Organophosphorverbindungen enthält.

Es ist ein wichtiges Merkmal des erfindungsgemäßen Verfahrens, daß die für eine gute Extrahierbarkeit des Titans notwendige Schwefelsäurekonzentration eingestellt wird durch Lösen der festen Aufschlußmasse mit Extraktionsdünnsäure und/oder durch partielles Aufladen des Extraktionsmittels mit Schwefelsäure vor und/oder während der Extraktion der Schwarzlösung, um die Extrahierbarkeit des Titans zu steigern.

Es ist ein weiteres Merkmal dieses Verfahrens, da die Extraktionsdünnsäure, die sowohl quantitativ als auch qualitativ der Dünnsäure des klassischen Verfahrens entspricht, ohne weitere Aufkonzentrierung als eine mittel-und/oder hochkonzentrierte Schwefelsäure in die Aufschlußreaktion rückgeführt wird zum Lösen der festen Aufschlußmasse.

Gemäß dieser Ausführungsform erhält man eine titanylsulfathaltige Lösung, in der das Verhältnis Schwefelsäure zu TiO$_2$, weiter Säurezahl genannt, extrem hoch ist, so daß eine Schwarzlösung dieser Art nur durch Extraktion verarbeitet werden kann. Die Menge der erfindungsgemäß rückgeführten Extraktionsdünnsäure kann in breiten Grenzen schwanken, insbesondere zwischen 10 bis 90%. In der Praxis wird jedoch die Menge begrenzt sein durch die Löslichkeit von Eisen(II)sulfat und anderen Fremdmetallsulfaten und liegt bevorzugt zwischen 50 und 85%, bezogen auf die gesamte Extraktionsdünnsäure.

Gemäß einer Ausführungsform wird das Extraktionsmittel mit einer bevorzugt mittelhoch-und/oder hochkonzentrierten gegebenenfalls metallsalzhaltigen Schwefelsäure kontaktiert um eine verdünnte oder mittelhochkonzentrierte wäßrige Schwefelsäurelösung une eine mit Schwefelsäure partiell beladenen organischen Phase zu erhalten, wobei letztgenannte anschließend als Extraktionsmittel für die Solventextraktion von Titanylsulfat und gegebenenfalls Schwefelsäure aus der Schwarzlösung eingesetzt wird.

Eine weitere Ausführungsform, gegebenenfalls in Kombination mit der vorgenannten, besteht darin, daß eine mittelhoch-und/oder hochkonzentrierte gegebenenfalls metallsalzhaltige Schwefelsäure während der mehrstufigen Extraktion von Titanylsulfat und/oder Schwefelsäure zudosiert wird. Dies geschieht zwischen der ersten und letzten Stufe und bevorzugt verteilt über mehrere Stufen, z.B. in mehreren Mixer/Settler-Stufen.

Die für das Aufladen des Extraktionsmittels mit Schwefelsäure benötigte Schwefelsäuremenge ist selbstverständlich abhängig. von der Extrahierbarkeit der Schwefelsäure, welche bei steigender Konzentration an freier Schwefelsäure in der zu extrahierenden Lösung zunimmt. Demzufolge werden für die erfindungsgemäß einzusetzende, gegebenenfalls metallsalzhaltige Schwefelsäurlösung in der Praxis Konzentrationen zwischen 40 und 96 Gew.-% H$_2$SO$_4$ bevorzugt.

Je nach Gehalt dieser Säure wird die Menge dann so gewählt, daß pro Mol der erfindungsgemäßen Organophosphorverbindungen in dem Extraktionsmittel 0,1 bis 1 mol; bevorzugt 0,2 bis 0,8 mol, Schwefelsäure verwendet werden.

Die Rückführung der Extraktionsdünnsäure in die Aufschlußreaktion von titanhaltigen Schlacken und/oder Ilmenit zur Herstellung einer Scharzlösung mit hoher Säurezahl hat mehrere Vorteile.

So kann auf diese Weise die für eine praktisch quantitative Extraktion des Titanylsulfats benötigte Schwefelsäuremenge entscheidend gesenkt werden.

Ein weiterer Vorteil besteht darin, daß parallel mit der vorgenannten Senkung der benötigten Schwefelsäuremenge eine Zunahme der Selektivität der Titan-Extraktion, insbesondere gegenüber Schwefelsäure und Vanadium, realisiert wird, welche, nach Rückextraktion, zu $TiOSO_4$-Lösungen mit bedeutend niedrigeren Säurezahlen und Vanadiumwerten führt.

Gemäß dieser Ausführungsform wird sich, speziell im Falle von Aufschlüssen auf Schlackebasis, die Konzentration an Grünsalz noch erhöhen, sodaß eine Kristallisation von Grünsalz aus der Schwarzlösung unter diesen Bedingungen notwendig wird. In der Praxis werden jedoch Eisen-Konzentrationen zwischen 2 und 4 Gew.-% bzw. zwischen 5 und 7 Gew.-% für Schlacke bzw. Ilmenit-Schwarzlösungen erhalten.

Weil somit titanylsulfathaltige Lösungen mit extremhohen Säurezahlen vorliegen, ist es ein wichtiger Vorteil dieser Erfindung, daß während und/oder nach der Extraktion von Titanylsulfat aus der Schwarzlösung durch Abkühlung ein Teil des Eisengehalts als Eisen(II)sulfat entfernt werden kann. In der Praxis wird die von Titanylsulfat befreite wäßrige eisensulfat-und fremdmetallhaltige Lösung in mehreren nacheinander geschalteten Stufen abgekühlt unter gleichzeitiger Ausfällung von Eisen(II)sulfat.

Die Stufenzahl variiert vorzugsweise zwischen einer une 3 Stufen und liegt bevorzugt bei 2. Die Kühltemperatur liegt vorteilhaft zwischen 4° und 25° C und bevorzugt zwischen 7 und 15° C.

Es fällt dabei eine Suspension von Eisen(II)sulfat an, die etwa 65 bis 75% des Gesamtanteils des Eisens in der Schwarzlösung enthält und nur mit bis zu etwa 0,6 Gew.-% an Fremdmetallen in Salzform verunreinigt ist, dies sind hauptsächlich Magnesium, Mangan, Aluminium und in ppm-Konzentrationen Titan.

Die nach der Filtration von Eisen(II)sulfat anfallende Menge an wäßriger Schwefelsäurelösung wird in die Extraktion zurückgeführt.

Eine weitere Ausführungsform besteht darin, daß das während und/oder nach der Extraktion anfallende Eisen(II)sulfat mit Extraktionsdünnsäure gewaschen und/oder umkristallisiert wird, bevor die Extraktionsdünnsäure in die Aufschlußreaktion zurückgeführt wird.

Dei dabei benötigten Verhältnisse an Extraktionsdünnsäure zu Eisen(II)sulfat liegen zwischen 5 zu 1 bis 1 zu 1 und insbesondere bei 2 zu 1.

Das auf diese Weise gereinigte Eisen(II)sulfat kann ohne weiteres verarbeitet werden.

Die aus dem vorbeschriebenen Extraktionsprozeß stammende Extraktphase enthält, neben Titanylsulfat und Schwefelsaure, auch 4 bis 15 Gew.-% gelöstes Wasser und ist im allgemeinen mit bis zu etwa 0,1 Gew.-% an Fremdmetallen in Salzform verunreinigt, hauptsächlich Fe und weiter auch ppm-Konzentrationen Al, Mg, Mn, V, Cr. Es ist somit auch ein weiteres Merkmal der vorliegenden Erfindung, daß die bei der Extraktion der Schwarzlösung anfallende Extraktphase vor dem Stripping an einer Zwischenwäsche, weiter "Scrubbing" genannt, mit Wasser und/oder einer Schwefelsäure und/oder Titanylsulfat enthaltenden wäßrigen Lösung unterworfen wird.

Es resultieren hierbei einerseits eine praktisch fremdmetallsalzfreie Titanylsulfat und Schwefelsäure enthaltende organische Phase und andererseits eine fremdmetall-und gegebenenfalls titanhaltige wäßrige Schwe felsäurelösung, welche bevorzugt in die Extraktion der Schwarzlösung zurückgeführt wird, letztgenanntes zur Rückgewinnung des Titaninhaltes.

Durch das Scrubbing wird eine sehr gute Reinigungswirkung erreicht bei Mengenverhältnissen Waschflüssigkeit/Extrakt von 1:50 bis 1:5, insbesondere 1:30 bis 1:10, und bei Schwefelsäurekonzentrationen der eingesetzten Waschflüssigkeit von 0 bis 40 Gew.-%, bevorzugt 0 bis 25 Gew.-%. Werden die Menge und die Konzentration der eingesetzten Schwefelsäurelösung sowohl in der Extraktion als auch beim Scrubbing so gewählt, daß die beim Scrubbing anfallende wäßrige Lösung weniger als 40 Gew.-% an freier Schwefelsäure enthält, dann werden zusammen mit dem Fremdmetallwerten und gegebenenfalls einem Teil der Schwefelsäure auch ein Teil des Titanylsulfats in die dabei anfallende wäßrige Lösung überführt. Das Titan kann aus einer solchen Lösung zurückgewonnen werden durch Rückführung in die Extraktion der Schwarzlösung.

Die beim Scrubbing anfallende von den Fremdmetallsalzen befreite organische Phase wird anschließend an einer Rückextraktion ("Stripping") durch Waschen mit Wasser und/oder einer verdünnten wäßrigen Schwefelsäure und/oder Titanylsfulat enthaltenden Lösung unterworfen. Hierdurch wird einerseits eine praktisch fremdmetallsalzfreie schwefelsäurehaltige $TiOSO_4$-Lösung und andererseits eine zum größten Teil von Titanylsulfat und Schwefelsäure befreite organische Phase erhalten.

Die Titanylsulfat-Konzentration der hierbei erhaltenen wäßrigen Phase ist abhängig vom Mengenverhältnis Stripflüssigkeit/organische Phase. Wird letzteres auf Werte zwischen 1:10 und 1:1 eingestellt, werden im allgemeinen $TiOSO_4$-Konzentrationen zwischen 10 und 45 Gew.-% erreicht.

Strebt man sehr konzentrierte, z.B. 30 bis 45 Gew.-%ige $TiOSO_4$-Lösungen an, dann erhält die gestrippte organische Phase meistens noch Restkonzentrationen zwischen 0,3 und 3 Gew.-% $TiOSO_4$. Bei Rückführung einer solchen Resttitan enthaltenden organischen Phase in die Extraktionsstufe kann der Titaninhalt unter Umständen teilweise oder vollständig in die damit in Kontakt kommende wäßrige Phase übergehen.

Demzufolge kann es von Vorteil sein, das restliche Titan aus der gestrippten organischen Phase zurückzugewinnen, wobei die gestrippte organische Phase zusätzlich mit Wasser und/oder verdünnter wäßriger gegebenenfalls metallsalzhaltiger Schwefelsäure nachgewaschen wird in einem Mengenverhältnis Waschflüssigkeit/organische Phase zwischen 1:20 und 1:1. Hierbei wird ein meistens weniger als 0,2 Gew.-% $TiOSO_4$ enthaltendes organisches Extraktionsmittel erhalten, das in die Extraktionsstufe zurückgeführt werden kann. Das verdünnte wäßrige titanylsulfat-und meistens auch schwefelsäurehaltige Waschwasser kann vorteilhaft als Waschflüssigkeit sowohl im Scrubbing als auch in der Rückextraktion eingesetzt werden.

Diese Erfindung besteht somit im wesentlichen aus mehreren miteinander kombinierten Solventextraktionen: einer Extraktion, gegebenenfalls in mehreren Schritten, wobei Titanylsulfat und Schwefelsäure in ein organisches Medium überführt werden, gegebenenfalls eine Kühlkristallisation zur Entfernung des enthaltenen Eisen(II)sulfates, gegebenenfalls ein Scrubbing zur Entfernung der mitgeschleppten Fremdmetallsalze und eines Teils der mitextrahierten Schwefelsäure, sowie einer Rückextraktion, wobei das Titanylsulfat und die Schwefelsäure zum größten Teil abgestreift werden und gegebenenfalls eine Nachbehandlung der gestripten organischen Phase zur vollständigen Rückgewinnung der Titanwerte.

Nach dem erfindungsgemäßen Verfahren wird durch die Reinigung der Schwarzlösung durch Titan-Solventextraktion einerseits eine praktisch fremdmetallsalzfreie $TiOSO_4$-Lösung erhalten, welche anschließend in Hydrolysier-und Kalzinierverfahren zu $TiO_2$-Pigmenten aufgearbeitet werden kann. Daneben erhält man eine praktisch titanfreie Schwefelsäurelösung, welche die volle Fremdmetallsalzfracht der eingesetzten Schwarzlösung trägt, doch zum größten Teil ohne weitere Aufkonzentrierung in die Aufschlußreaktion rückgeführt werden kann zum Lösen der Aufschlußmasse. Weiter erhält man ein z.B. für die Eisenoxidpigmentherstellung geeignetes Eisen(II)sulfat. Die bei der Hydrolyse anfallende verdünnte Schwefelsäurelösung (Dünnsäure) enthält demzufolge praktisch keine Fremdmetallionen mehr. Der Titaninhalt dieser Lösung kann mit der Schwefelsäure durch Aufkonzentrierung und Rückführung z.B. in die Aufschlußreaktion vollständig zurückgewonnen werden.

Für den Fall, daß das $TiO_2$ nicht als Pigment eingesetzt werden soll, kann natürlich auf den Schritt der Kalzinierung verzichtet werden.

Das erfindungsgemäße Verfahren eignet sich besonders für eine kontinuierliche Fahrweise. Es können daher alle nach dem Gegenstromprinzip gebauten Extraktionsapparate, insbesondere Extraktionskolonnen und mehrstufige Mixer/Settler-Kombinationen, eingesetzt werden. Die theoretische Stufenzahl beträgt unter wirtschaftlich optimalen Bedingungen etwa 5 bis 10 Stufen für die Kombination der Titanylsulfat-und Schwefelsäureextraktion, 2 bis 4 Stufen für das Scrubbing, 2 bis 6 Stufen für die Rückextraktion und 1 bis 4 Stufen für die Nachbehandlung. Die Kristallisation des Eisen(II)sulfats kann sowohl in geeigneten Apparaten zur Kühlungskristallisation oder Vakuumkristallistion durchgeführt werden.

Die vorbeschriebenen Teilprozesse können alle bei Temperaturen im Bereich von etwa 15 bis zu etwa 70°C durchgeführt werden. Bei höheren Temperaturen nimmt die Gefahr der spontanen Hydrolyse des Titanylsulfats zu. Im Falle von Aufschlüssen auf Ilmenit-oder Schlacke-Basis mit Rückführung der Extraktionsdünnsäure ist es aus praktischen Gründen ratsam, die Extraktion von Titanylsulfat und gegebenenfalls von Schwefelsäure bei mindestens 35° C durchzuführen, dies um die frühzeitige Abscheidung von kristallinem Eisensulfat aus der einzusetzenden Schwarzlösung und gegebenenfalls aus den diversen eisensulfatreichen wäßrigen Phasen des Verfahrens zu vermeiden. Nur die Kühlungskristallisation soll bei niedrigen Temperaturen erfolgen.

Das erfindungsgemäße Verfahren bietet im Falle der Herstellung von $TiO_2$-Pigmenten gegenüber der bisher geübten Praxis mehrere Vorteile. Es wird ein Verfahren bereitgestellt, mit dessen Hilfe großtechnisch nahezu fremdmetallsalzfreie $TiOSO_4$-Lösungen mit hohem Titangehalt und mit Säurezahlen unter 2,3, sogar unter 1,9, hergestellt werden können, bei Titanausbeuten bis zu 99,5 %, ausgehend von sowohl hoch-als auch niedrig mit $TiOSO_4$ beladenen Schwarzlösungen mit extrem hoher Säurezahl zwischen 3 und 4.5.

Analytische Zusammensetzung
der $TiOSO_4$-Lösung

---

| | |
|---|---|
| $TiOSO_4$ | 30 bis 45 Gew.-% |
| $H_2SO_4$ frei | 10 bis 20 Gew.-% |
| Säurezahl | 1,7 bis 2,3 |
| Fe | < 10 ppm |
| Al | < 5 ppm |
| Mg | < 5 ppm |
| Mn | < 5 ppm |
| V | < 30 ppm |
| Cr | < 15 ppm |

Solche $TiOSO_4$-Lösungen sind hydrolysierbar und führen nach Kalzinierung des Titanoxidhydrats zu besonders hochwertigem $TiO_2$, unabhängig vom Fremdmetallgehalt der eingesetzten Titan-Rohstoffe.

Ein weiterer Vorteil besteht darin, daß die bei der Hydrolyse anfallende Dünnsäure praktisch frei von Fremdmetallen ist. Demzufolge kann der Titaninhalt dieser wäßrigen Säure vollständig zurückgewonen werden durch Aufkonzentrierung und Rückführung der dabei erhaltenen hochprozentigen Schwefelsäure z.B. in die Aufschlußreaktion.

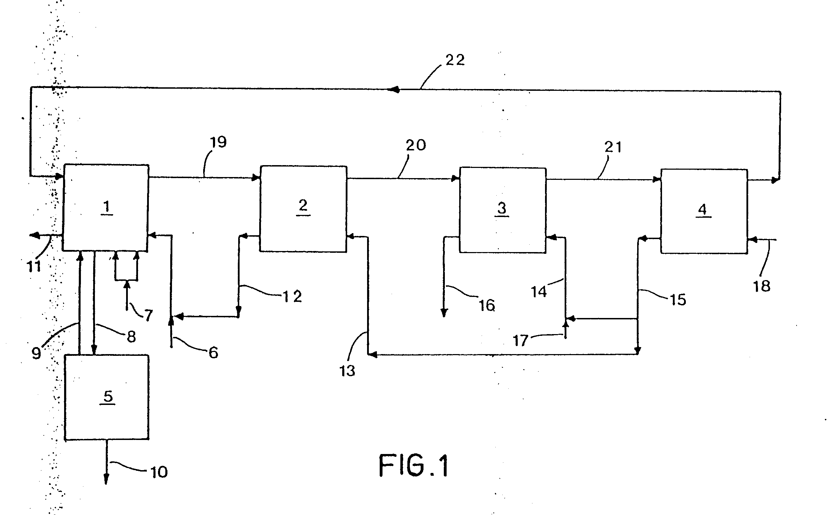

Anhand der Figur 1 wird eine bevorzugte Ausführungsform der vorliegenden Erfindung erläutert. Hierbei kommt den Zahlen folgende Bedeutung zu:

1. Gegenstromapparatur für die Extraktion
2. Gegenstromapparatur für das Scrubbing
3. Gegenstromapparatur für das Stripping
4. Gegenstromapparatur für die Nachbehandlung
5. Apparatur für die Kühlungskristallisation von Eisensulfat
6. Leitung für die Schwarzlösung
7. Leitung für mittelhoch-und/oder hochkonzentrierte Schwefelsäure
8. Leitung für die extrahierte eisensulfathaltige Schwefelsäurelösung
9. Leitung für das Filtrat aus der Kristallisation von Eisensulfat
10. Leitung für Eisensulfat
11. Leitung für die extrahierte fremdmetallsalzhaltige Schwefelsäurelösung
12. Leitung für die beim Scrubbing anfallende wäßrige Phase
13. Leitung für die Scrubflüssigkeit
14. Leitung für die Stripflüssigkeit
15. Leitung für das bei der Nachbehandlung anfallende Waschwasser
16. Leitung für die bei Stripping anfallende $TiOSO_4$-Lösung
17. Leitungen für Wasser
18. Leitungen für Wasser
19. Leitung für die Extraktphase
20. Leitung für die organische Phase des Scrubbing
21. Leitung für die organische Phase des Stripping
22. Leitung für das im Kreis geführte Extraktionsmittel

Im einzelnen wird das Verfahren dieser Ausführungsform wie folgt durchgeführt:

Die zu extrahierende Schwarzlösung 6 und die beim Scrubbing anfallende wäßrige titanhaltige Phase 12 werden in einer mehrstufigen Gegenstromapparatur 1 mit dem organischen Extraktionsmittel 22 in Kontakt gebracht. Während der Extraktion wird gegebenenfalls eine mittel-und/oder hochkonzentrierte Schwefelsäure in mehreren Teilströmen zugeführt, damit das Extraktionsmittel in mehreren Stufen mit Schwefelsäure ausreichend hoch beladen wird, um eine selektive und zugleich auch quantitative Extraktion zu gewährleisten. Es resultiert eine praktisch titanfreie, eisensulfat-und fremdmetallsalzhaltige Schwefelsäurelösung 8, die in einer mehrstufigen Kühlungsapparatur 5 getrennt wird in einerseits·kristallines Eisensulfat 10 und andererseits in eine fremdmetallsalzhaltige Schwefelsäurelösung 9, die zurückgeführt wird in die Gegenstromapparatur 1. Es resultiert eine praktisch titanfreie fremdmetallsalzhaltige Schwefelsäurelösung 11.

In einer ebenfalls mehrstufigen Gegenstromapparatur 2 wird das bei der Extraktion anfallende organische Extrakt 19 einem Scrubbing mit einer wäßrigen Flüssigkeit 13 unterworfen, wobei eine praktisch fremdmetallsalzfreie organische Phase 20 erhalten wird.

Hieraus werden das Titanylsulfat und die Schwefelsäure in einer mehrstufigen Gegenstromapparatur 3 abgestreift mittels eine wäßrigen Flüssigkeit 14. Man erhält hierbei eine zum größten Teil von Titanylsulfat und Schwefelsäure befreite organische Phase 21, welche schließlich noch in einer mehrstufigen Gegenstromapparatur 4 mittels Wasser nachbehandelt wird. Das hierbei anfallende Waschwasser 15 wird als Stripflüssigkeit und/oder als Scrubflüssigkeit verwendet und die nachbehandelte organische Phase in die Extraktion 1 zurückgefahren.

Nachfolgend wird das erfindungsgemäße Verfahren beispielhaft erläutert, ohne daß hierin eine Einschränkung auf die Beispiele zu sehen ist.

Im folgenden werden Schwarzlösungen eingesetzt, deren Zusammensetzung der Tabelle 1 zu entnehmen sind.

**Tabelle 1**

**Zusammensetzung der Schwarzlösungen**

| | A | B | C | D | E | F |
|---|---|---|---|---|---|---|
| $H_2SO_4$ frei (Gew.-%) | 11,3 | 12,0 | 9,6 | 24,1 | 9,17 | 11,16 |
| $TiO_2$ (Gew.-%) | 15,3 | 15,7 | 15,3 | 10,3 | 10,3 | 8,70 |
| Fe (Gew.-%) | 2,00 | 1,95 | 1,89 | 2,80 | 7,2 | 6,90 |
| Al (Gew.-%) | | | | 0,58 | 0,29 | 0,28 |
| Mg (Gew.-%) | | | | 0,97 | 0,34 | 0,35 |
| V (ppm) | | | | 1100 | 411 | 390 |
| Cr (ppm) | | | | 355 | 249 | 236 |
| Mn (ppm) | | | | 449 | 1040 | 1870 |

Beispiel 1

Ein Gemisch aus 1000 Gewichtsteilen Schwarzlösung A und 1500 Gewichtsteilen 65 %iger $H_2SO_4$ wurde bei 50° C in 4 Mixer/Settler-Stufen im Gegenstrom in Kontakt gebracht mit 2095 Gewichtsteilen mit Wasser gesättigtem Dibutylbutylphosphonat (DBBP). Es wurden 1684 Gewichtsteile extrahierte wäßrige Phase und 2911 Gewichtsteile Extraktphase der folgenden Zusammensetzung erhalten:

|  |  | wäßrige Phase | Extraktphase |
|---|---|---|---|
| $H_2SO_4$ | (Gew.-%) | 33,0 | 16,8 |
| $TiO_2$ | (Gew.-%) | 0,090 | 5,20 |
| Säurezahl |  |  | 4,5 |
| Fe | (ppm) |  | 323 |
| V | (ppm) |  | 231 |
| Cr | (ppm) |  | 25 |

Die Ausbeute der Titan-Extraktion beträgt 99,0 %.

Beispiel 2

Mit diesem Beispiel wird verdeutlicht, daß die Selektivität der Titan-Extraktion gegenüber Schwefelsäure und gegenüber Fremdmetallen verbessert werden kann durch Herabsetzen der $H_2SO_4$-Konzentration der zu extrahierenden Lösung.

Ein Gemisch aus 1000 Gewichtsteilen Schwarzlösung B und 1216 Gewichtsteilen 52 %iger Schwefelsäure wurde bei 4°C im Gegenstrom extrahiert in 8 Mixer-Settler-Stufen mit 2097 Gewichtsteilen mit Wasser gesättigtem DBBP. Es wurden 1574 Gewichtsteile extrahierte wäßrige Phase und 2739 Gewichtsteile Extraktphase erhalten.

Aus der nachfolgenden Zusammensetzung geht hervor, daß die Extraktphase gegenüber der aus Beispiel 1 eine etwas niedrigere Konzentration an Schwefelsäure (Säurezahl: 3,8 gegenüber 4,5) und an Fremdmetallen aufweist. Die Titan-Ausbeute beträgt 96,7 %:

|  |  |  | wäßrige Phase | Extraktphase |
|---|---|---|---|---|
| $H_2SO_4$ | frei | (Gew.-%) | 22,8 | 13,3 |
| $TiO_2$ |  | (Gew.-%) | 0,33 | 5,25 |
| Säurezahl |  |  |  | 3,8 |
| Fe |  | (ppm) |  | 222 |
| V |  | (ppm) |  | 135 |
| Cr |  | (ppm) |  | 18 |

Beispiel 3

Die Selektivität der Titan-Extraktion kann auch durch ein Scrubbing der Extraktphase gesteigert werden.

Es wurden 1000 Gewichtsteile Schwarzlösung C mit 480 Gewichtsteilen der wäßrigen Phase II aus dem Scrubbing und 519 Gewichtsteile 80 %iger Schwefelsäure vermischt. Diese Mischung wurde bei 40°C in 6

9

Mixer/Settler-Stufen im Gegenstrom kontaktiert mit 2.014 Ge wichtsteilen mit Wasser gesättigtem DBBP. Hierbei wurden einerseits 1240 Gewichtsteile extrahierte wäßrige Phase I und andererseits 2773 Gewichtsteile Extraktphase erhalten.

Letztgenannte wurde einem Scrubbing unterworfen durch eine 4-stufige Gegenstromextraktion mit 325 Gewichtsteilen Wasser bei Bildung von 480 Gewichtsteilen wäßriger Phase II, welche in der Extraktion der Schwarzlösung eingesetzt wurden, sowie 2618 Gewichtsteilen organische Phase III.

Die Phasen I und III weisen die nachfolgenden Analysewerte auf:

|  |  | Wäßrige Phase I aus der Extraktion | Organische Phase III aus der Scrubbing |
|---|---|---|---|
| $H_2SO_4$ frei | (Gew.-%) | 23,9 | 8,1 |
| $TiO_2$ | (Gew.-%) | 0,101 | 5,86 |
| Säurezahl |  |  | 2,6 |
| Fe | (ppm) |  | < 2 |
| V | (ppm) |  | 71 |
| Cr | (ppm) |  | 5 |

Durch Kombination des Extraktionsprozesses mit einem Scrubbing können organische Ti-haltige Phasen erhalten werden, welche, im Vergleich zum Beispiel 2, durch vergleichsweise geringere Konzentrationen an Schwefelsäure und Fremdmetallen gekennzeichnet sind.

Die Ausbeute der Titan-Extraktion ist praktisch quantitativ (99,2 %) trotz des stark reduzierten $H_2SO_4$-Einsatzes. Wird jedoch die Menge der 80 %igen Schwefelsäure noch weitere herabgesetzt, winkt die Ausbeute ohne eine signifikante Zunahme der Selektivität gegenüber Schwefelsäure:

| $H_2SO_4$ 80 % (Gewichts- teile) | Rest-$TiO_2$ in Phase I | Ausbeute $TiO_2$ | Säurezahl in Phase III |
|---|---|---|---|
| 519 | 0,101 Gew.-% | 99,2 % | 2,6 |
| 472 | 0,144 Gew.-% | 98,8 % | 2,8 |
| 456 | 0,272 Gew.-% | 97,7 % | 2,5 |

## Beispiel 4

Die Extraktionsdünnsäure wird eingesetzt als Lösemittel für die feste Schlacke-Aufschlußmasse.

Dadurch wird eine Schwarzlösung bekommen, mit einer extrem hohen Säurezahl, sodaß eine starke Zunahme der Selektivität gegenüber Schwefelsäure und Vanadium realisiert wird.

Schwarzlösung D entspricht einem Schlacke-Aufschluß, gelöst in Extraktionsdünnsäure (wäßrige Phase I aus der Extraktion) und ist charakterisiert durch eine hohe Säurezahl.

Bei 40° C wurden 1.000 Gewichtsteile Schwarzlösung D in eine 7stufigen Mixer/Settler-Batterie im Gegenstrom mit 1952 Gewichtsteilen eines Extraktionsmittels mit folgender Zusammensetzung in Kontakt gebracht.

DBBP : 60,8 Gew.-%

Azomatfreies Verdünnungsmittel : 34,5 Gew.-%

$TiO_2$ : 0,015 Gew.-%

$H_2O$ : 4,5 Gew.-%

Während der Extraktion wurden 479 Gewichtsteile wäßriger Phase II aus dem Scrubbing in Stufe 6 und 77 Gewichtsteile 80 %iger $H_2SO_4$ in Stufe 5 zugeführt.

Es wurden 1057 Gewichtsteile extrahierte wäßrige Phase I und 2403 Gewichtsteile Extraktphase erhalten.

Letztere wird anschließend einem 4-stufigen Scrubbing unterworfen unter Einsatz von 380 Gewichtsteilen einer 7,7 Gew.-% $TiO_2$ und 15 Gew.-% freie Schwefelsäure enthaltenen wäßrigen Lösung. Es resultieren 479 Gewichtsteile einer wäßrigen Phase II, welche in Stufe 6 der Extraktion eingesetzt wurde und 2.305 Gewichtsteile einer organischen Phase III.

Die Phasen I und III weisen die nachfolgenden Analysenwerte auf:

|  |  | wäßrige Phase I aus der Extraktion | organische Phase III aus der Scrubbing |
|---|---|---|---|
| $H_2SO_4$ frei | Gew.-% | 24,05 | 4,39 |
| $TiO_2$ | " | 0,12 | 5,54 |
| Säurezahl |  |  | 2,55 |
| Fe | " | 2,82 | <0,0010 |
| Al | " | 0,26 | 0,0019 |
| Mg | " | 0,67 | 0,0077 |
| V | ppm | 690 | 3 |
| Cr | " | 234 | 3 |
| Mn | " | 370 | <1 |

Der $TiO_2$-Restgehalt der extrahierten wäßrigen Phase I beträgt demnach 0,12 Gew.-%, entsprechend einer Ausbeute von 98,8 %, bezogen auf die Schwarzlösung.

Beispiel 5

2707 Gewichtsteile einer organischen Phase III folgender Zusammensetzung:

DBBP ca. 49 Gew.-%

Aromatfreies Verdünnungsmittel ca. 28 Gew.-%

$H_2O$ ca. 7 Gew.-%

$H_2SO_4$ frei 6,31 Gew.%

$TiO_2$ 4,14 Gew.-%

Säurezahl 2,72 Gew.-%

Fe <10 ppm

Al < 5 ppm

Mg <·5 ppm

V 5 ppm

Cr 6 ppm

Mn < 1 ppm

stammend aus einer Extraktion der Ilmenit-Schwarzlösung E mit anschließendem Scrubbing wurden bei 50° C in einer 3-stufigen Mixer-Settler Batterie im Gegenstrom mit 277 Gewichtsteilen Wasser abgestreift, wobei einerseits eine 621 Gewichtsteile $TiOSO_4$-Lösung IV und andererseits eine 2363 Gewichtsteile organische Phase erhalten wurde, wobei letztere anschließend, ebenfalls bei 50°C, einer 4-stufigen Nachwäsche mit 172 Gewichtsteilen Wasser unterworfen wurde unter Bildung von 288 Gewichtsteilen Waschwasser V und 2.247 Gewichtsteilen organische Phase VI.

|  |  | TiOSO$_4$-Lösung | Waschwasser | Org.Phase |
|---|---|---|---|---|
|  |  | IV | V | VI |
| H$_2$SO$_4$ frei | Gew.-% | 14,54 | 17,83 | 0,11 |
| TiO$_2$ | " | 17,63 | 3,83 | 0,05 |
| Säurezahl |  | 2,02 |  |  |
| Fe | ppm | ‹10 | ‹10 | ‹10 |
| Al | " | ‹ 5 | ‹ 5 | ‹ 5 |
| Mg | " | ‹ 5 | ‹ 5 | ‹ 5 |
| V | " | 6 | ‹ 1 | ‹ 1 |
| Cr | " | 7 | ‹ 1 | ‹ 1 |
| Mn | " | ‹ 1 | ‹ 1 | ‹ 1 |

Somit kann die organische Phase VI ohne weiteres als Extraktionsmittel in der Extraktion der Schwarzlösung wiederverwendet werden, während das Waschwasser V zur Verwertung des Titaninhaltes sowohl als Scrubflüssigkeit als auch als Stripflüssigkeit in Frage kommt.

Die vorgenannte TiOSO$_4$-Lösung IV wurde schließlich durch Hydrolyse, Filtration, Waschen, Trochnung und Kalzinierung aufgearbeitet zur Bildung eines besonders hochwertigen TiO$_2$-Pigments mit folgenden Fremdmetallgehalten:

Fe :    3 ppm        V  :    3 ppm
Al :   ‹4 "          Cr :    2 "
Mg :   ‹1 "          Mn :   ‹1 "

Solche TiOSO$_4$-Lösungen können auch eingesetzt werden zur Herstellung von hochreinen Titanoxidhydrat- oder Titandioxid-Produkten, welche anschließend als Rohstoff für in der Herstellung von anorganischen Titanaten dienen können.

Beispiel 6

Dieses Beispiel zeigt, daß bei Schwarzlösungen mit hohem Eisengehalt während der Extraktion von TiOSO$_4$ der größte Teil des Eisengehalts als Grünsalz zurückgewonnen werden kann.

2620 Gewichtsteile einer organischen Phase VII mit folgender Zusammensetzung DBBP ca. 49 Gew.-% Aromatfreies Verdünnungsmittel ca. 28 Gew.-%

H$_2$O ca. 7 Gew.-%

H$_2$SO$_4$ frei 14,12 Gew.-%

TiO$_2$ 0,37 Gew.-%

werden in einer 4-stufigen Mixer/Settler Batterie in Gegenstrom gebracht mit 1.338 Gewichtsteilen einer Schwarzlösung F und 424 Gewichtsteilen einer 80-%igen Schwefelsäure unter Erhaltung von einerseits 2.691 Gewichtsteilen einer organischen Extraktphase und andererseits 1.691 Gewichtsteilen einer eisensulfathaltigen säßrigen Phase.

Letztgenannte liefert nach Abkühlen bei 7°C in einer 2-stufigen Kühlungsapparatur 1.691 Gewichtsteile einer eisensulfathaltigen Suspension, die abfiltriert wird, wobei 244 Gewichtsteile eines kristallinen Eisensulfats und 1.447 Gewichtsteile einer wäßrigen Phase VIII erhalten wird, wobei letztere zurück in die Extraktion geführt wird.

Die Phase VIII und das Eisensulfat weisen die nachfolgenden Analysenwerte auf:

|  |  | Eisensulfat | wäßrige Phase VIII |
|---|---|---|---|
| Fe | Gew.-% | 20,52 | 1,53 |
| TiO$_2$ | " | 0,064 | 0,52 |
| V | ppm | 19 | |
| Al | " | 127 | |
| Mg | " | 2300 | |
| Mn | " | 1890 | |
| Cr | " | 18 | |

Die Ausbeute an Fe in das Eisensulfat entspricht 72 % bezogen auf die Schwarzlösung.

## Ansprüche

1. Verfahren zur Herstellung von hochwertigem Titandioxid nach dem Schwefelsäure-Aufschlußverfahren durch Umsetzung von Ilmenit und/oder titanhaltigen Schlacken mit hochprozentiger Schwefelsäure, Auflösen der festen Aufschlußmassen mit metallsulfathaltiger wäßriger Schwefelsäure und gegebenenfalls Wasser und Reduktion des dreiwertigen Eisens und Abtrennung des unlöslichen Rohstoffanteils zur Gewinnung einer fremdmetallsalzrechen schwefelsäurehaltigen Titanylsulfat-Lösung, weiter Schwarzlösung genannt, Hydrolyse der Schwarzlösung mit anschließender Abtrennung des gefällten Titanoxidhydrads, intensiver Wasserwäsche, Trocknung und gegebenenfalls Kalzinierung, dadurch gekennzeichnet, daß die Schwarzlösung vor der Hydrolyse mit einem organischen Medium weiter "Extraktionsmittel" genannt, in Kontakt gebracht wird und Rückextraktion, weiter "Stripping" genannt, der dabei gebildeten organischen Phase mittels Wasser und/oder einer Schwefelsäure und/oder Titanylsulfat enthaltenden wäßrigen Lösung unter Rückführung der dabei erhaltenen organischen Phase in die Extraktion, wobei für das Auflösen der festen Aufschlußmasse die bei der Extraktion anfallende metallsulfathaltige Schwefelsäure, weiter Extraktionsdünnsäure genannt, eingesetzt wird.

2. Verfahren gemäß Anspruch 1, dadurch gekennzeichnet, daß die Extraktionsdünnsäure teilweise, bevorzugt zwischen 50 bis 85 % der Gesamtmenge, zum Auflösen der festen Aufschlußmasse zurückgeführt wird.

3. Verfahren gemäß einem der Ansprüche 1 oder 2, dadurch gekennzeichnet, daß nach der Titanylsulfat-Extraktion Eisen(II)sulfat durch Abkühlen aus der erhaltenen wäßrigen Lösung auskristallisiert und abgetrennt wird, wobei das anfallende Filtrat in die Extraktion zurückgeführt wird.

4. Verfahren gemäß einem oder mehrerer der Ansprüche 1 bis 3, dadurch gekennzeichnet, daß das Abkühlen mehrstufig bei Temperaturen zwischen 4 und 25°C, bevorzugt zwischen 7 und 15°C, erfolgt.

5. Verfahren gemäß einem oder mehrerer der Ansprüche 1 bis 4, dadurch gekennzeichnet, daß das Extraktionsmittel vor und/oder während der Extraktion mit einer gegebenenfalls metallsalzhaltigen Schwefelsäure einer Konzentration von mindestens 40 Gew.-% in Kontakt gebracht wird.

6. Verfahren gemäß einem der Ansprüche 1 oder 5, dadurch gekennzeichnet, daß das Extraktionsmittel eine oder mehrere Organophosphorverbindungen der allgemeinen Formel
$$R_m (R'O)_n P = O$$
in denen
R geradkettige oder verzweigte Alkylgruppen,
R' Alkylreste R oder auch gegebenenfalls substituierte Arylgruppen bedeuten,
R und/oder R' gegebenenfalls Heteroatome wie z. B. Sauerstoff, Halogen, Phosphor, Stickstoff enthalten,
m Werte von 1, 2 oder 3 und
n Werte von 0, 1 oder 2 annehmen kann,
mit m + n = 3 und insgesamt mindestens 12 C-Atome aufweisend,
zusammen mit 3 bis 15 Gew.-% Wasser enthält.

7. Verfahren gemäß Anspruch 6, dadurch gekennzeichnet, daß die Organophosphorverbindungen mit aromatischen, aliphatischen und/oder naphthenischen, gegebenenfalls Heteroatome wie Sauerstoff, Halogen oder Phosphor enthaltenden Kohlenwasserstoffen verdünnt ist.

8. Verfahren gemäß einem oder mehrerer der Ansprüche 1 bis 7, dadurch gekennzeichnet, daß das Extraktionsmittel 1 bis 5 Mol der Organophosphorverbindungen pro Mol zu extrahierendes Titanylsulfat enthält.

9. Verfahren gemäß einem oder mehrerer der Ansprüche 1 bis 8, dadurch gekennzeichnet, daß die Konzentration der Organophosphorverbindungen im Extraktionsmittel 5 bis 95 Gew.-%, bevorzugt 35 bis 90 Gew.-%, beträgt.

10. Verfahren gemäß einem oder mehrerer der Ansprüche 5 bis 9, dadurch gekennzeichnet, daß pro Mol der Organophosphorverbindungen 0,1 bis 1 Mol, bevorzugt 0,2 bis 0,8 Mol Schwefelsäure verwendet werden.

11. Verfahren gemäß einem oder mehrerer der Ansprüche 1 bis 10, dadurch gekennzeichnet, daß die bei der Extraktion der Schwarzlösung anfallende Extraktphase vor dem Stripping an einer Zwischenwäsche, weiter "Schwefelsäure und/oder Titanylsulfat enthaltenden wäßrigen Lösung unterworfen wird.

12. Verfahren gemäß Anspruch 11, dadurch gekennzeichnet, daß die bei Scrubbing anfallende säßrige Schwefelsäurelösung in die Extraktion der Schwarzlösung zurückgeführt wird.

13. Verfahren gemäß einem oder mehrerer der Ansprüche 1 bis 12, dadurch gekennzeichnet, daß die beim Stripping anfallende, zum größten Teil von Titanylsulfat und Schwefelsäure befreite organische Phase vor der Rückführung in die Extraktion einer Nachbehandlung durch Waschen mit Wasser und/oder einer verdünnten wäßrigen, gegebenenfalls metallsalzhaltigen Schwefelsäurelösung unterworfen wird.

FIG.1